# EUROPEAN PATENT APPLICATION

(11) **EP 4 404 596 A1**
(43) Date of publication of application: **24.07.2024**
(21) Application number: 23152505.6
(22) Date of filing: 19.01.2023
(51) Int. Cl.: H04W 4/021

(54) **METHOD AND CONTROL UNIT FOR A VEHICLE**

(71) Applicant: Volkswagen Aktiengesellschaft, 38440 Wolfsburg (DE)
(72) Inventor: Szollmann, Tom, 12101 Berlin (DE); Pfadler, Andreas, 13357 Berlin (DE); Frankiewicz, Tobias, 38446 Wolfsburg (DE)

(57) **Abstract**

The invention refers to a method and a control unit for a vehicle (10).

It is provided that a radiation area (12) of an uplink communication (14) from the vehicle (10) to an accessible base station (16) is determined based on a detected geographical position of the communication module. Further, it is determined whether the determined radiation area (12) reaches into another coverage region (20) different from the coverage region (18) assigned to the base station (16) in order to detect interference (24) caused by the vehicle's communication (14) with the base station (16) located in the other coverage region (20).

## Description

The invention refers to a method and a control unit for a vehicle.

Communication modules used in modern vehicles are subject to strict requirements with regard to electromagnetic compatibility (EMC), which among other things define usable and permitted frequency bands for radio systems. EMC requirements aim to reduce interference, which is a technically induced problem indicative of the reception of unwanted signals in radio systems, also known as electromagnetic interference or radio interference - in the following: simply "interference". However, the EMC requirements are globally inconsistent and typically regulated at country level, so there are geographic border regions where EMC requirements vary. In addition, there are separate regulations along critical infrastructures - so-called special zones - such as military facilities, hospitals, airports and even toll facilities.

Vehicles operating in the vicinity of such border regions or even across borders can inadvertently interfere with neighboring radio systems, such as mobile communications, aircraft radio, military radio, amateur radio, and so forth. For example, when the vehicle establishes a radio connection with a base station crossing a boundary and the EMC requirements between the respective coverage regions differ, interference is caused on an intermediate section of the communication. This problem occurs especially in the case of geographically complex boundary lines. The caused interference at the neighboring radio system can influence the functionality of other vehicles and devices reliant on the neighboring radio system.

### State of the art

There are approaches known in the prior art for reducing the caused interference of radio systems. However, the known solutions provide static regulations assigned to specific geographical regions without reflecting interferences in border regions sufficiently. For example, a preselection of supported frequency bands (EMC requirements) for mobile devices based on the place of sale is insufficient since the place of sale of the vehicles or the mobile devices does not necessarily correspond to the place of use. Furthermore, country codes of devices are also not sufficient to determine the applicable EMC requirements, since the actual geographical position of the device is decisive to determine whether actual interference is caused. In addition, changes to the rule set along the actual signal path of the communication are not taken into account. Especially for restricted zones, the responsibility for compliance with EMC requirements rests on the shoulders of the user of the mobile device or the owner of the vehicle. Furthermore, further restricting the usable frequency bands is also not a valid option since restriction in general leads to a loss of usable bandwidth and thus to a restriction of mobile communications performance and transmission rates.

Document US 2015/0189568 A1 discloses a method for reduction of interference in a radio communication system. In particular, heterogeneous radio communication systems comprise different cell types with different extents of their radio coverages, e.g. macro cells, micro cells, pico cells and so forth. For improving the downlink transmission to mobile stations, the cited document teaches that domination interference from macro cells must be reduced or even removed. Therefore, the document suggests using a method comprising the steps of determining overlapping coverage areas and determining unused radio resources or radio resources with a limited transmission. However, when no unused radio resources are available, interference may not be reduced sufficiently.

### Description of the invention

Thus, there is a demand for a method and a control unit for a vehicle reducing the occurrence of interference in a radio system.

This problem is solved by the method and the control unit for a vehicle according to the independent claims. Further advantages and embodiments will become apparent from the dependent claims as well as the following description.

According to an aspect of the invention, a method for a vehicle is provided. The vehicle comprises a communication module for mobile communication, a position detection system configured to determine a geographical position of the communication module and a memory storing map data and electromagnetic compatibility (EMC) requirements corresponding to the map data. The mobile communication may be performed according to 4G LTE and/or 5G standards. The memory may be implemented as a non-volatile memory, a volatile memory, a flash memory, a hard disk drive (HDD) or a solid state drive (SDD).

According to one step, a geographical position of the communication module is detected by using the position detection system and/or the communication module. In other words, the actual geographical position of the vehicle is acquired. Preferably, the geographical position of the communication module may be detected by localization functions provided by the used mobile services such as 4G LTE or 5G.

According to another step, a radiation area of an uplink communication from the communication module to an accessible first base station assigned to a first coverage region underlying first EMC requirements is determined. This step is preferably performed based on the acquired geographical position of the communication module, the stored map data and the stored EMC requirements corresponding to the map data. In other words, the radiation area corresponds to the extent and range of the communication signal of the communication module which can substantially lead to interference in a neighboring radio system. A base station is accessible when a communication between the base station and the communication module of the vehicle is possible. The radiation area may be a circle circumferentially extending around the vehicle or a section of the circle, such as a cone. For example, the stored map data include information about the location, the direction and the coverage region of the first base station.

Further, a second coverage region of a second base station underlying second EMC requirements is determined. This step is preferably performed based on the acquired geographical position of the communication module, the stored map data and the stored EMC requirements corresponding to the map data. The second base station may also be accessible for communication with the communication module of the vehicle (accessible second base station). The first EMC requirements differ from the second EMC requirements, for example, such that a communication signal based on the first EMC requirements potentially causes an interference in the the second coverage region underlying the second EMC requirements. In other words, the second coverage region may correspond to a neighboring radio system.

Furthermore, an intersection of the determined radiation area and the second coverage region is determined. Preferably, the size and/or the shape of an area of the intersection may be determined. In other words, it is identified whether an overlap between the determined radiation area and the second coverage region occurs. That is, the size and/or the shape of the overlap may be determined. The intersection and/or the overlap may be interpreted as a potential source for causing interference. Based on the size and/or the shape of the overlap, a magnitude of the interference may be determined.

According to another step, the communication module is controlled depending on the determined intersection. Preferably, the communication module may be controlled such that the intersection area (or the size of the overlap) is at least reduced or can be completely avoided.

The information about the size and shape of the overlap may be used as a basis for a determining a possible countermeasure for reducing or completely avoiding interference. For example, the communication module may be controlled such that merely a communication with the first base station is possible if no intersection between the determined radiation area and the second coverage region is detected. The second region may be (directly) adjacent to the first region. Accordingly, interference caused by the vehicle operating in border regions underlying different EMC requirements can be reduced or even completely avoided. Thus, the method is capable of selectively (and dynamically) adjusting the mobile radio of the vehicle in order to reduce interference.

According to an embodiment, the communication module may be deactivated if an intersection between the determined radiation area and the second coverage region is determined. If no intersection is determined, the communication module may be regularly used for mobile radio. The selective deactivation of the communication module adaptively avoids interference caused by the mobile radio of the vehicle. Preferably, the communication module may be temporally deactivated. For example, after a specified time has elapsed since deactivation of the communication module, the method may be repeated in order to determine whether the mobile radio of the vehicle still causes interference. For example, if at least a reduced interference is recognized, the communication module may be (re-)activated to perform mobile communication with the first base station. The specified time may be between 2 seconds to 60 seconds, preferably between 5 and 30 seconds, particularly preferred 15 seconds. Due to the repetition of the method steps corresponding to the determination of the intersection, an activation of the communication module may be achieved if no intersection or a reduced overlap between the determined radiation area and the second coverage region is determined. Advantageously, a mobile radio can be provided as long as the caused interference is lowered or completely avoided.

Preferably, the steps of determining the radiation area and determining an intersection of the determined radiation area and the second coverage region may be repeated based on a detected change of the geographical position of the communication module exceeding a predetermined threshold. For example, the predetermined threshold may be a value of 10 m, preferably 25 m, particularly preferred 100 m. Due to the change of the geographical position of the communication module, the determined radiation area may change such that a different overlap between the determined radiation area and the second coverage region, such as no intersection or a reduced overlap, may be determined. If no intersection or a reduced overlap is detected, the communication module may be (re-)activated to perform mobile communication with the first base station. Advantageously, a mobile radio can be provided as long as the caused interference is lowered or completely avoided.

According to another embodiment, the step of controlling the communication module depending on the determined intersection may comprise restricting the communication or adjusting a configuration of the communication between the communication module and the first base station. In other words, a countermeasure for reducing or completely avoiding interference caused by the vehicle may be determined and initiated when the intersection of the determined radiation area and the second coverage region is determined. Advantageously, the interference caused by the vehicle can be lowered or completely avoided.

Preferably, a beamforming direction of the communication module may be blocked based on the acquired geographical position of the communication module and the determined intersection. For example, one or more beamforming directions of the communication modules which are expected to cause interference may be blocked. Advantageously, the interference caused by the vehicle can be lowered or completely avoided. Furthermore, a (prestored) beamforming blacklist associated with geographical positions of the vehicle and beamforming directions to base stations may be used and/or generated. Due to the use of beamforming blacklists, a repetitive determination of blocked beamforming directions can be omitted so that computational energy can be saved.

Additionally or alternatively, a communication with the first base station may be blocked based on the acquired geographical position of the communication module and the determined intersection. For example, the communication with one or more base stations which are expected to cause interference may be blocked. Advantageously, the interference caused by the vehicle can be lowered or completely avoided. Furthermore, a (prestored) base station blacklist associated with geographical positions of the vehicle and the base stations may be used and/or generated. Due to the use of base station blacklists, a repetitive determination of blocked base stations for communication can be omitted so that computational energy can be saved.

Additionally or alternatively, a power of the transmission of the communication module may be adjusted based on the acquired geographical position of the communication module and the determined intersection. For example, the power of the transmission of the communication module may be reduced to a level which causes reduced interference or which is expected to not cause interference. Advantageously, the interference caused by the vehicle can be lowered or completely avoided. Furthermore, a (prestored) transmission power blacklist associated with geographical positions of the vehicle and the base stations may be used and/or generated. Due to the use of transmission power blacklists, a repetitive determination of the adjusted transmission power level for communication can be omitted so that computational energy can be saved.

According to another embodiment, the radiation area of the uplink communication from the communication module to the first base station may be determined based on directional and/or beamforming characteristics of the antenna(s) of the communication module. The directional and/or beamforming characteristics of the antenna(s) of the communication module may be stored in the memory. Hereby, the confidence level of the determination of the radiation area may be improved.

According to an embodiment, a frequency used for the uplink communication from the communication module to the first base station for determining the radiation area may be a frequency deviating from (not interfering with) the frequencies used or permitted for radio systems of EMC requirements related to coverage regions different from the first coverage region of the first base station, such as the second EMC requirements of the second coverage region, for example. In other words, the frequency used for the uplink communication may be a frequency which cannot be used mutually for mobile communication according to the EMC requirements. For example, the 5G standard defines a plurality of frequencies (or frequency bands) which are permitted for mobile communication. However, the EMC requirements related various coverage regions may not include all of the frequencies defined in the 5G standard. That is, the frequencies permitted by EMC requirements between different coverage regions may differ such that a frequency used in one coverage region may not cause interference in the one coverage region but in another coverage region. Advantageously, even the uplink communication for determining the radiation area does not cause interference in coverage regions different from the first coverage region of the first base station, such as the second coverage region.

According to another embodiment, radiation areas of uplink communications from the communication module to a plurality or any of the accessible base stations assigned to a plurality of coverage regions underlying the first EMC requirements may be determined. Accordingly, intersections (or overlaps) of the determined radiation areas and the second coverage region may be determined. If a communication to one of the plurality of base stations without intersection is determined, the base station of the plurality of base stations without intersection is selected and/or if no base station without intersection is determined, the base station with the least determined intersection area (or overlap) may be selected. In addition, the communication module may be controlled further dependent on the selected base station. If no communication to any of the plurality of base stations with a reduced determined intersection is determinable, the communication module may be deactivated. Advantageously, a mobile radio of the vehicle may be performed while the interference caused by the vehicle can be lowered or completely avoided.

Preferably, if a communication to at least two of the plurality of base stations without intersection or with equally reduced intersections is determined, the base station with the highest transmission quality among the at least two of the plurality of base stations without intersection or with equally reduced intersection areas may be selected. Advantageously, the communication quality may be improved while the interference caused by the vehicle can be lowered or completely avoided.

According to another embodiment, the communication module may be controlled to communicate with other road users and/or traffic infrastructure using vehicle-to-everything-communication (V2X). Furthermore, the geographical position of the communication module may be determined and/or the stored map data and/or the EMC requirements corresponding to the map data may be updated or supplemented based on the V2X-communication. The IEEE specified standard of the V2X-communication may be 802.11p. Furthermore, cellular V2X (C-V2X) technology may be used which is a 3rd Generation Partnership Project (3GPP) standard for V2X applications such as self-driving cars. V2X-communication is important in generating real-time and highly reliable information for implementing safe, efficient, and environmentally-conscious transportation services. Moreover, the communication module may be controlled to communicate with other road users and/or traffic infrastructure by using vehicle-to-vehicle (V2V) and/or vehicle-to-infrastructure (V2I) communication.

According to another embodiment, the position detection system may comprise at least one of a Global Navigation Satellite System (GNSS) service, a navigation system and an object and vehicle area detection unit. The GNSS service may be Global Positioning System (GPS), Galileo or other satellite navigation systems. The object and vehicle area detection unit may be configured to visually recognize landmarks which are geographically fixed and distinguishable, for example unique landmarks. Landmarks may be, for example, information boards at border crossing points, such as sign 393 of the German traffic regulations (Straßenverkehrsordnung - StVO), town and country signs, road and lane layouts, unique buildings, traffic signal systems and so forth.

According to another embodiment, the stored map data may comprise at least one of road and lane layouts, country boundaries, geographic locations and boundaries of critical infrastructure, locations and orientations of base stations and geographic network cell distributions. Critical infrastructure may be hospitals, airports, military installations and so forth. For example, special no-radio zones and special areas may be separately designated and stored. Further, a so-called coverage map may be stored in the memory. The coverage map may include locations and orientations of base stations and/or antenna masts and geographic network cell distributions.

According to another aspect of the invention, a control unit for a vehicle is provided. The control unit is configured to perform the above-mentioned method. The vehicle may be the above-mentioned vehicle. The features and the advantages of the above-mentioned method can be applied analogously to the control unit. For example, the vehicle comprising the control unit and the first base station (and/or any other base station) may form a radio system.

The above control device (control unit) may be implemented by electrical or electronic parts or components (hardware) or by firmware (ASIC). Additionally or alternatively, the functionality of the control device may be realized when executing a suitable program (software). Also, the control device may be realized by a combination of hardware, firmware and/or software. For example, individual components of the control unit for providing individual functionalities may be designed as a separate integrated circuit or may be arranged on a common integrated circuit.

The individual components of the control unit may be designed as one or more processes running on one or more processors in one or more electronic computing devices and generated during execution of one or more computer programs. The computing devices may be configured to cooperate with other components, such as a communication module for mobile communication or a position detection system, to implement the functionalities described herein. The instructions of the computer programs may be stored in a memory, such as a RAM element. However, the computer programs may also be stored in a non-volatile storage medium, such as a CD-ROM, flash memory or the like.

It is further apparent to the skilled person that the functionalities of a plurality of computing units (data processing devices) may be combined or combined in a single device, or that the functionality of a particular data processing device may be distributed among a plurality of devices to implement the functionality of the control unit.

A further aspect relates to a computer program comprising instructions which, when the program is executed by a computer, such as a control unit for a vehicle, cause the computer to perform the method according to the invention, in particular a method for a vehicle.

Further preferred embodiments of the invention result from the additional features mentioned in the dependent claims.

The various embodiments of the invention mentioned herein can be advantageously combined with each other, unless otherwise specified in the individual case. Various objects and advantages of the present invention will become apparent to those skilled in the art from the following detailed description of embodiments, when read in light of the accompanying drawings in which
- Fig. 1: schematically shows a vehicle operating in the vicinity of a border region where EMC requirements vary;
- Fig. 2: schematically shows a flow chart of the method according to the present invention;
- Fig. 3: schematically shows the vehicle of Fig. 1 operating in the vicinity of another border region where EMC requirements vary;
- Fig. 4: schematically shows the vehicle of Fig. 1 operating in the vicinity of a further border region where EMC requirements vary;
- Fig. 5: schematically shows the vehicle of Fig. 1 operating in the vicinity of a further border region where EMC requirements vary; and
- Fig. 6: schematically shows the vehicle of Fig. 1 operating in the vicinity of a further border region where EMC requirements vary.

In the following, recurring and similar features in this and in the subsequent representations are provided with the same reference numerals and a repetitive description thereof is omitted.

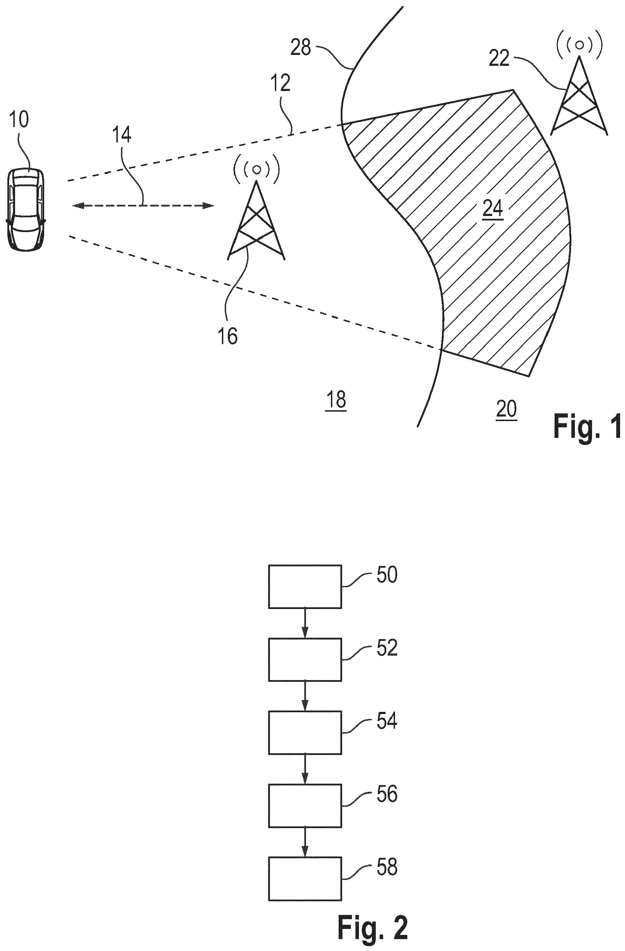

Fig. 1 schematically shows a vehicle 10 operating in the vicinity of a border region where EMC requirements vary. The vehicle 10 comprises a communication module (not shown) for mobile communication, a position detection system (not shown) configured to determine a geographical position of the communication module (and the vehicle 10), a memory (not shown) storing map data and EMC requirements corresponding to the map data and a control unit (not shown). The position detection system comprises a GNSS service, such as GPS or Galileo, and a navigation system. The stored map data comprises road and lane layouts, country boundaries, geographic locations and boundaries of critical infrastructure, such as hospitals, airports, military installations and so forth. The memory further comprises a plurality of coverage maps, such as the first and second coverage regions 18, 20 including locations and orientations of the base stations assigned with the plurality of coverage maps, such as the first and the second base station 16, 22, and geographic network cell distributions.

The communication module of the vehicle 10 performs mobile communication 14 with an accessible first base station 16. The mobile communication is performed according to 4G LTE and/or 5G standards. A radiation area 12 of the communication 14 from the vehicle 10 to the first base station 16 is cone-shaped, as illustrated in Fig. 1. The first base station 16 is assigned to a first coverage region 18 underlying first EMC requirements. A boundary 28 separates the first coverage region 18 from a second coverage region 20 of a second base station 22. The second coverage region 20 underlies second EMC requirements at least partially different from the first EMC requirements.

As further shown in Fig. 1, the radiation area 12 of the communication 14 of the communication module of the vehicle 10 extends into the second coverage region 20. The intersection 24 between the radiation area 12 and the second coverage region 20 causes undesired interference in the second coverage region 20, thereby affecting the radio and the functionality of the second coverage region 20 and other vehicles and devices reliant on the radio of the second coverage region 20. The magnitude of the interference is dependent on an area of intersection 24 which corresponds to the overlap between the radiation area 12 and the second coverage region.

Fig. 2 schematically shows a flow chart of a method for a vehicle, such as the vehicle 10 depicted in Fig. 1, according to the present invention.

According to a first step 50, a geographical position of the communication module of the vehicle 10 is detected by using the position detection system. In particular the GNSS service and or the navigation system may be used for detecting the geographical position of the communication module. Additionally or alternatively, the geographical position of the communication module may be detected by using the communication module and localization functions provided by the used mobile services such as 4G LTE or 5G.

Furthermore, the radiation area 12 of an uplink communication 14 from the communication module to the first base station 16 assigned to the first coverage region 18 underlying first EMC requirements is determined (second step 52). The radiation area 12 corresponds to the extent and range of the communication 14 of the communication module which can substantially cause interference (cf. area of intersection 24 in Fig. 1).

During a third step 54, the second coverage region 20 of the second base station 22 underlying second EMC requirements is determined. Based on the acquired position of communication module of the vehicle 10, the second coverage region 20 can be determined by using the coverage maps stored in the memory, for example.

Further, an intersection 24 of the determined radiation area 12 and the second coverage region 20 is determined (fourth step 54). That is, it is identified whether an overlap between the determined radiation area 12 and the second coverage region 20 occurs. The intersection 24 and the overlap is used for the interpretation of a potential source for interference caused by the vehicle 10. The size and shape of the area of the intersection 24 (overlap) between the determined radiation area 12 and the second coverage region 20 is determined.

According to fifth step 56, the communication module is controlled depending on the determined intersection 24. The communication module is controlled such that the area of the intersection 24 (the size of the overlap) is at least reduced or can be completely avoided. The information about the size and shape of the overlap may be used as a basis for a determining a possible countermeasure for reducing or completely avoiding interference. Examples of possible countermeasures will be described in view of Figs. 1 and 3 to 6.

With respect to the vehicle 10 operating in the situation as depicted in Fig. 1, the communication module may be either deactivated or a transmission power of the communication module may be decreased, such as cut in half, in order to completely avoid interference located in the second coverage region 20 caused by the vehicle 10. By reducing the transmission power of the communication module, the extent and the range of the radiation area 12 decreases. The transmission power can be (dynamically) adjusted to such an extent that the communication 14 with the first base station 16 remains within the first coverage region 18 - that is, the communication 14 does not extend into the second coverage region 20. As a result, the communication 14 of the vehicle 10 can be performed while the interference caused by the vehicle 10 is completely avoided. Even in situations, in which the transmission power of the communication module cannot be reduced to the required power level to avoid interference, every reduction of transmission power available will help to reduce the interference caused by the vehicle 10 since the area of the intersection 24 will become smaller. Furthermore, the adjusted transmission power may be included into a transmission power blacklist associated with geographical positions of the vehicle 10 and the base stations, such as the first base station 16. Due to the use of transmission power blacklists, a repetitive determination of the adjusted transmission power level for communication can be omitted so that computational energy can be saved.

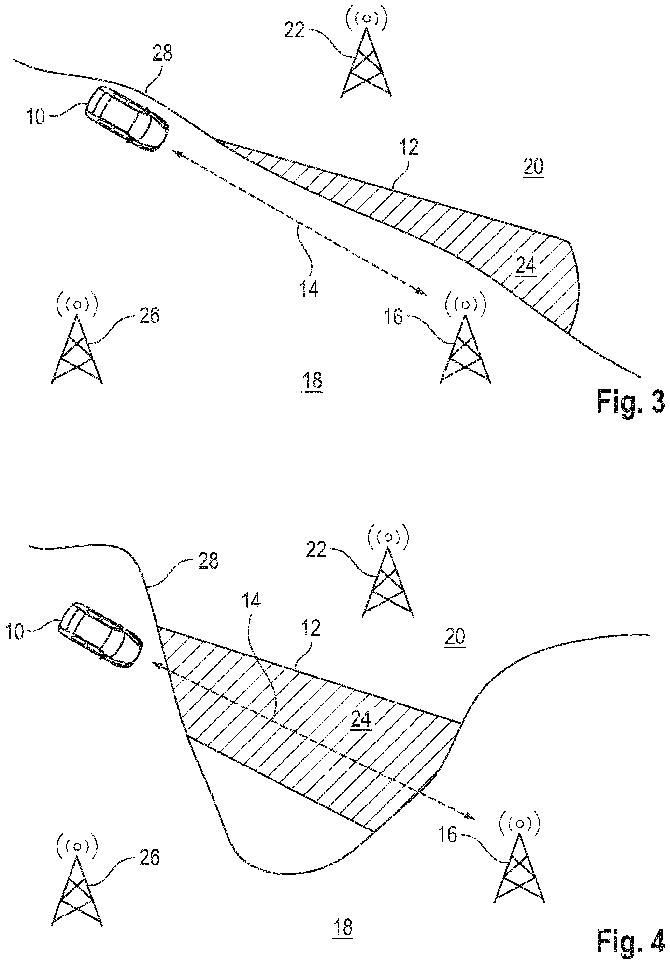

Fig. 3 schematically shows the vehicle of Fig. 1 operating in the vicinity of another border region where EMC requirements vary. As depicted in Fig. 3, the vehicle's driving direction is substantially in parallel to the boundary 28. However, since the positions of the vehicle 10 and the first base station 16 are in near vicinity of the boundary 28, the radiation area 12 of the communication 14 partially extends into the second coverage region 20, thereby causing interference. In this example, the communication module may be either deactivated or directional or beamforming characteristics of the antennas of the communication module may be adjusted such that the direction of the radiation angle is inclined towards the first coverage region 18 in order to completely avoid interference located in the second coverage region 20 caused by the vehicle 10. By inclining the radiation angle of the communication module towards the first coverage region 18, the area of the intersection 24 decreases. The directional or beamforming characteristics of the antennas of the communication module may be adjusted to such an extent that the communication 14 with the first base station 16 remains within the first coverage region 18 - that is, the communication 14 does not extend into the second coverage region 20. In particular, the beamforming directions causing interference in the second coverage region 20 may be blocked. As a result, the communication 14 of the vehicle 10 can be performed while the interference caused by the vehicle 10 is completely avoided. Even in situations, in which the directional or beamforming characteristics of the antennas of the communication cannot be adjusted to the required radiation angle to avoid interference, every bit of rotation of the radiation angle available will help to reduce the interference caused by the vehicle 10 since the area of the intersection 24 will become smaller. Furthermore, a the adjusted radiation angle of the communication module may be introduced into a beamforming blacklist associated with geographical positions of the vehicle and beamforming directions to base stations, such as the first base station 16. Due to the use of beamforming blacklists, a repetitive determination of blocked beamforming directions can be omitted so that computational energy can be saved.

In another embodiment, the communication module may be controlled to determine radiation areas 12 of uplink communications 14 from the communication module to a plurality (or any) of accessible base stations 26 assigned to the first coverage region 18 underlying the first EMC requirements and intersections 24 (or overlaps) of the determined radiation areas 12 and the second coverage region 20. As depicted in Fig. 3, there is another base station 26 present in the first coverage region 18 and a communication 14 with the other base station 26 appears possible without intersection 24 or at least with reduced area of the intersection 24. Thus, the other base station 26 is selected for communication 14. Accordingly, the communication module is controlled to perform communication 14 with the selected other base station 26 in order to perform mobile communication while the interference caused by the vehicle 10 can be lowered or completely avoided.

The communication situation of the vehicle 10 as shown in Fig. 4 is similar to the situation in Fig. 3. However, according to the situation in Fig. 4, the boundary line 28 is shaped such that the radiation area 12 of the communication 14 of the communication module of the vehicle 10 with the first base station 16 crosses a tip of the second coverage region 20. An adjustment of the radiation angle of the communication module will not help to significantly decrease the interference existent in the tip of the second coverage region 20 while maintaining the communication 14 with the first base station 16. In this example, a base station blacklist may be generated in which the detected geographical position of the vehicle 10 and the first base station 16 is stored in order to deactivate or prevent any communication 14 between the communication module at the stored geographical position with the first base station 16 in future. Instead, a communication 14 to the other base station 26 may be performed, as already discussed in view of Fig. 3.

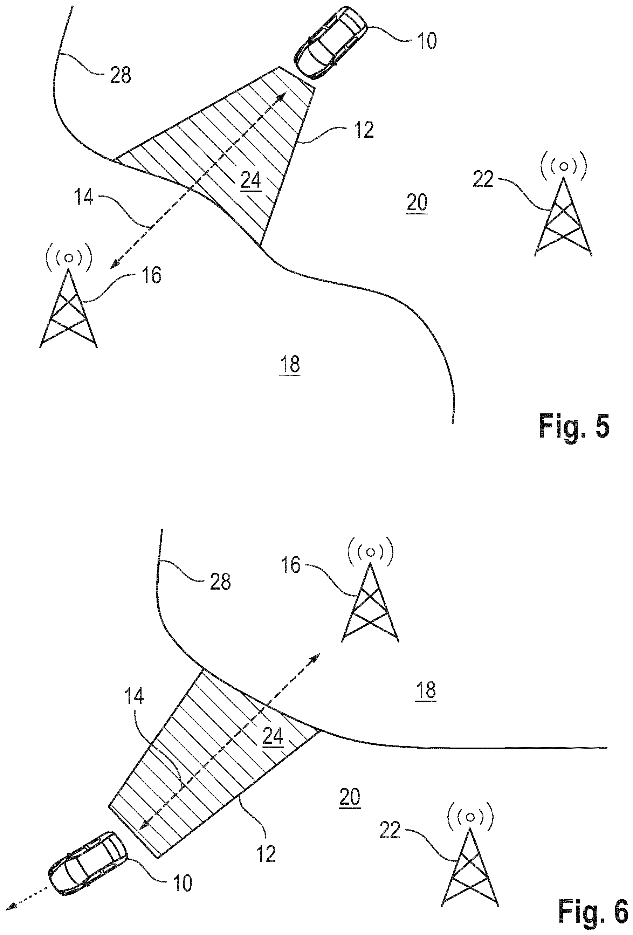

Figs. 5 and 6 show the vehicle 10 of Fig. 1 in similar situations. The vehicle 10 operates in the vicinity of border regions where EMC requirements vary. According to the situation depicted in Fig. 5, the vehicle approaches the boundary 28 and the communication module of the vehicle 10 connects prematurely with the second base station 22 of the second coverage region 20, thereby causing interference in the first coverage region 18. In Fig. 6, the vehicle 10 departs from the boundary 28 and the communication module remains connected with the first base station 16, thereby causing interference in the second coverage region 20. In order to reduce or completely avoid interference, the communication module may be deactivated when the vehicle approaches or departs from the boundary 28 in near proximity of a few meters, for example. Alternatively, the communication module may be controlled to perform communication with the base station of the respective coverage region (Fig. 5: second base station 22 and second coverage region 20; Fig. 6: first base station 16 and first coverage region 18) as long as the boundary 28 has not been crossed by the vehicle 10. For example, the respective other base station to which communication causes interference (Fig. 5: first base station 16; Fig. 6: second base station 22) may be blocked and the base station and the geographical positions of the respective coverage region and/or the vehicle 10 may be stored in the base station blacklist in order to avoid interference in future.

### Reference signs

- 10: vehicle
- 12: radiation area
- 14: (uplink) communication between communication module and first base station
- 16: first base station
- 18: first coverage region
- 20: second coverage region
- 22: second base station
- 24: intersection of radiation area and second coverage region
- 26: plurality of base stations
- 28: boundary
- 50: first method step
- 52: second method step
- 54: third method step
- 56: fourth method step
- 58: fifth method step

## Claims

1. A method for a vehicle (10), wherein the vehicle (10) comprises a communication module for mobile communication, a position detection system configured to determine a geographical position of the communication module and a memory storing map data and electromagnetic compatibility (EMC) requirements corresponding to the map data and wherein the method includes the steps of:
- detecting (50) a geographical position of the communication module by using the position detection system and/or the communication module,
- determining (52) a radiation area (12) of an uplink communication (14) from the communication module to an accessible first base station (16) assigned to a first coverage region (18) underlying first EMC requirements,
- determining (54) a second coverage region (20) of a second base station (22) underlying second EMC requirements,
- determining (56) an intersection (24) of the determined radiation area (12) and the second coverage region (20), and
- controlling (58) the communication module depending on the determined intersection (24).

2. The method according to claim 1, wherein the communication module is deactivated if an intersection (24) between the determined radiation area (12) and the second coverage region (20) is determined.

3. The method according claim 2, wherein the steps of determining the radiation area (12) and determining an intersection (24) of the determined radiation area (12) and the second coverage region (20) is repeated based on a detected change of the geographical position of the communication module exceeding a predetermined threshold.

4. The method according to any one of the preceding claims, wherein controlling the communication module depending on the determined intersection (24) comprises restricting the communication (14) or adjusting a configuration of the communication (14) between the communication module and the first base station (16).

5. The method according to claim 4, wherein a beamforming direction of the communication module is blocked based on the acquired geographical position of the communication module and the determined intersection (24).

6. The method according to claim 4 or 5, wherein a communication (14) with the first base station (16) is blocked based on the acquired geographical position of the communication module and the determined intersection (24).

7. The method according to any one of the claims 4 to 6, wherein a power of the transmission of the communication module is adjusted based on the acquired geographical position of the communication module and the determined intersection (24).

8. The method according to any one of the preceding claims, wherein the radiation area (12) of the uplink communication (14) from the communication module to the first base station (16) is determined based on directional and/or beamforming characteristics of the antenna(s) of the communication module.

9. The method according to any one of the preceding claims, wherein a frequency used for the uplink communication (14) from the communication module to the first base station (16) for determining the radiation area (12) is a frequency deviating from the frequencies used or permitted by the second EMC requirements .

10. The method according to any one of the preceding claims, further comprising the steps of:
- determining radiation areas (12) of uplink communications (14) from the communication module to a plurality of accessible base stations (26) assigned to a plurality of coverage regions underlying the first EMC requirements,
- determining intersections (24) of the determined radiation areas (12) and the second coverage region (20),
- if a communication to one of the plurality of base stations (26) without intersection (24) is determined, selecting the base station of the plurality of base stations (26) without intersection (24), and/or if no base station without intersection (24) is determined, selecting the base station with the least determined intersection (24), and
- controlling the communication module further depending on the selected base station.

11. The method according to claim 10, wherein, if a communication to at least two of the plurality of base stations (26) without intersection (24) or with equally reduced intersections (24) is determined, select the base station with the highest transmission quality among the at least two of the plurality of base stations without intersection (24) or with equally reduced intersections (24).

12. The method according to any one of the preceding claims, further comprising the steps of:
- controlling the communication module to communicate with other road users and/or traffic infrastructure using Vehicle-to-everything-communication (V2X),
- wherein the geographical position of the communication module is determined and/or the stored map data and/or the EMC requirements corresponding to the map data are updated or supplemented based on the V2X-communication.

13. The method according to any one of the preceding claims, wherein the position detection system comprises at least one of a Global Navigation Satellite System (GNSS) service, a navigation system and an object and vehicle area detection unit.

14. The method according to any one of the preceding claims, wherein the stored map data comprise at least one of road and lane layouts, country boundaries, geographic locations and boundaries of critical infrastructure, locations and orientations of base stations and geographic network cell distributions.

15. A control unit for a vehicle (10), configured to perform the method according to any of the preceding claims.
